# FASCICULE DE BREVET EUROPEEN

(11) **EP 1 414 655 B1**
(45) Date de publication et mention de la délivrance du brevet: **01.02.2006**
(21) Numéro de dépôt: 02751144.3
(22) Date de dépôt: 17.07.2002
(51) Int. Cl.: B60C 13/00, B60C 3/06, B60C 3/04, B60C 19/00, B60C 15/00, B60C 15/02

(54) **PNEUMATIQUE AYANT DES FLANCS DISSYMETRIQUES ET RENFORCES**
LUFREIFEN MIT ASYMMETRISCHEN UND VERSTÄRKTEN SEITENWÄNDEN
TYRE WITH NON SYMMETRICAL REINFORCED SIDEWALLS

(30) Priorité: 25.07.2001 FR 0109966
(43) Date de publication de la demande: 06.05.2004
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: MUHLHOFF, Olivier, F-63000 Clermont-Ferrand (FR)
(74) Mandataire: Diernaz, Christian
(86) Numéro de dépôt international: PCT/EP2002/007953
(87) Numéro de publication internationale: WO 2003/010011

(56) Documents cités:
- EP-A- 0 770 504
- WO-A-02/09955
- US-A- 2 186 178
- US-A- 3 656 532

## Description

L'invention concerne un pneumatique à armature de carcasse semi-radiale ou radiale pouvant notamment mais non exclusivement équiper des véhicules pouvant rouler à grande vitesse.

Au cours de la prise d'un virage avec un véhicule équipé de pneumatiques à armature de carcasse semi-radiale ou radiale, des modifications des conditions de roulage interviennent et en particulier, l'empreinte (c'est-à-dire la surface de contact entre la bande de roulement de chaque pneumatique et la chaussée sur laquelle roule le véhicule) peut être très sensiblement modifiée dans la forme de son contour et dans sa surface. Cela conduit, compte tenu des forces de contact existant entre le pneumatique et ladite chaussée, à des comportements en roulage pouvant présenter des phénomènes de seuil se révélant délicats à maîtriser par un conducteur, notamment à vitesse élevée.

En configuration de virage, les pneumatiques d'un véhicule situés du côté extérieur au virage subissent des efforts transversaux d'intensité plus ou moins élevée ; ces efforts résultent du contact entre le sol et la bande de roulement et des fortes sollicitations verticales comprenant la charge initiale supportée par les pneumatiques et des surcharges (certains des pneumatiques du véhicule étant délestés d'une partie de leur charge au détriment des autres). Par côté extérieur au virage, on entend le côté du véhicule le plus éloigné du centre de rotation instantané dudit véhicule en virage. En outre, les ensembles pneumatiques/roues de montage situés du côté extérieur au virage sont déportés transversalement vers l'extérieur du virage par rapport à leur empreinte au sol, le flanc extérieur des pneumatiques étant fortement tendu sous les efforts de contact exercés par la chaussée sur la bande de roulement qui se trouve être tirée vers l'intérieur du virage (globalement, la partie de la bande de roulement du pneumatique en contact avec le sol ne glisse pas et suit une trajectoire curviligne correspondant audit virage). Sous ces conditions; la géométrie de l'empreinte se modifie et devient sensiblement trapézoïdale, le plus petit côté étant situé vers l'intérieur du virage. Ceci a pour conséquence une augmentation des pressions de contact sur la partie de la bande de roulement proche du flanc extérieur comparativement à la partie axialement opposée de la même bande. Cette nouvelle répartition des pressions de contact perturbe le fonctionnement du pneumatique en virage.

Pour des pneumatiques équipant des véhicules de tourisme, le besoin s'est fait sentir de disposer de solutions techniques permettant de réduire le plus possible la variation de géométrie de de l'empreinte de contact des pneumatiques lors d'un virage et de limiter le plus possible les variations de répartition de pression de contact dans ces mêmes conditions.

Le document US-A-2 186 178 décrit un pneumatique symétrique comprenant une armature de carcasse comprenant une pluralité de nappes ancrées à la fois sur des tringles de bourrelet et des anneaux de renforcement positionnés dans chacun des flancs.

La demande de brevet publiée sous le numéro WO02/09955 de la demanderesse décrit une nouvelle architecture de pneumatique pouvant rouler à grande vitesse et soumis à des couples moteur ou freineur de façon plus ou moins brutale. Pour accroître la résistance de l'armature de carcasse à ces couples, il est proposé une solution d'accroissement des rigidités transversale et longitudinale des flancs basée sur un principe d'anneau de renforcement additionnel dans au moins un des flancs combiné à la présence d'un profilé de mélange caoutchouteux situé radialement entre cet anneau additionnel et un élément d'ancrage de l'armature de carcasse dans chaque bourrelet.

Dans le but d'améliorer à la fois les performances d'adhérence en virage du pneumatique et de transmettre des couples tout en assurant une meilleure performance de stabilité en virage quel que soit le régime de vitesse de roulage, le pneumatique selon l'invention comprend les caractéristiques présentées dans la revendication 1. Le pneumatique comprend deux bourrelets, un sommet pourvu d'une bande de roulement et des flancs reliant le sommet aux dits bourrelets. Chacun des bourrelets du pneumatique comprend une partie - inclinée située radialement à l'intérieur et destinée à venir en contact avec un siège d'une jante de montage, ce siège étant tel que les points dudit siège axialement les plus à l'extérieur sont situés sur un cercle de plus grand diamètre que les points dudit siège axialement les plus à l'intérieur. La jante de montage comporte des rebords situés axialement à l'extérieur de ses sièges afin de limiter l'écartement axial des bourrelets lors du montage sur jante.

Le pneumatique selon l'invention est renforcé par une armature de carcasse comprenant au moins une nappe de carcasse formée de renforts parallèles entre eux dans la nappe et faisant avec la direction circonférentielle un angle compris entre 60° et 90°, ladite armature étant ancrée dans chaque bourrelet à au moins un élément annulaire d'ancrage. L'armature de carcasse est surmontée radialement à l'extérieur d'une armature de sommet elle même surmontée d'une bande de roulement.

Ce pneumatique comprend un premier et un second flanc, chacun desdits flancs ayant chacun un anneau inextensible additionnel situé axialement à l'intérieur de la nappe de carcasse pneumatique. L'angle du segment de droite passant par le centre de gravité de la section de l'anneau du second flanc et par l'anneau d'ancrage de bourrelet situé dans le prolongement dudit second flanc fait avec l'axe de rotation un angle β₂ ouvert vers l'extérieur du pneumatique.

En outre, chaque flanc comprend un profilé de couplage radialement situé entre l'anneau additionnel et l'élément annulaire d'ancrage de bourrelet pour réaliser un couplage mécanique entre ledit anneau additionnel et l'élément d'ancrage.

Ce pneumatique est tel que l'angle β₁ est différent de l'angle β₂.

Avantageusement, le premier flanc du pneumatique est prévu pour être placé côté extérieur d'un véhicule équipé avec ledit pneumatique et en ce que l'angle β₁ mesuré sur le premier flanc est inférieur à l'angle β₂ mesuré sur le second flanc.

Préférentiellement, l'angle β₁ pour le flanc côté extérieur est au plus égal à 70° et l'angle β₂ du flanc intérieur est.supérieur à 70°.

Préférentiellement l'angle β₂ mesuré sur le flanc intérieur est ouvert vers l'extérieur du pneumatique et est compris entre 75° et 100°.

Il faut entendre par élément annulaire d'ancrage de bourrelet tout élément qui permet de reprendre les efforts de tension de l'armature de carcasse sous l'effet de la pression de gonflage. Ledit élément annulaire de bourrelet peut être, comme connu en soi, une tringle, en général formée de fils ou câbles circonférentiels, ou plus généralement un empilement de plusieurs bandes de fils ou câbles faisant avec la direction circonférentielle un angle nul ou au plus égal à 10°. L'ancrage se fait, comme connu, par l'adhésion, sur une surface suffisante, de l'armature de carcasse sur l'élément annulaire et la surface d'adhésion pouvant avoir une forme demi torique (c'est le cas de l'enroulement de l'armature de carcasse autour d'une tringle enrobée de mélange de caoutchouc), ou se faire une surface cylindrique, tronconique où encore avoir la forme d'une couronne circulaire (c'est le cas d'une armature de carcasse accolée à ou insérée entre une(des) bande(s) de fils ou câbles circonférentiels ou quasi-circonférentiels). En outre et du fait du montage sur des sièges inclinés, chaque élément annulaire de bourrelet est soumis aux efforts de serrage sur lesdits sièges.

L'anneau additionnel de flanc peut se présenter sous plusieurs formes : il peut être un monofilament de section transversale de dimensions plus ou moins importantes ; il peut être sous forme d'un ensemble câblé, que ce soit une tringle ou un câble proprement dit ; il peut être sous forme d'empilement de bandes de fils ou câbles circonférentiels, l'empilement pouvant être parallèle au plan équatorial ou parallèle à un plan radial.

De manière équivalente, l'anneau additionnel peut être réalisé dans un matériau unique présentant une rigidité d'extension appropriée et, dans tous les cas, supérieure à la rigidité moyenne des mélanges caoutchouteux ; cet anneau additionnel peut être réalisé notamment en matière plastique, en polyuréthane, en polyamide aromatique, en résine renforcée par différentes fibres (carbone, verre, ...), voire en métal. Cet anneau additionnel peut aussi être constitué de deux matériaux ou plus.

L'anneau additionnel peut être creux pour limiter l'augmentation de poids résultant de sa présence dans chaque flanc.

De manière également équivalente, l'anneau additionnel de flanc et le profilé de couplage peuvent être intégrés dans un même élément unique faisant par exemple l'objet d'une réalisation indépendante de la fabrication du pneumatique lui-même et être ensuite incorporé dans le pneumatique au moment de sa fabrication.

Cet élément unique peut être réalisé en matériau unique ou bien dans un matériau composite (c'est à dire un matériau comprenant une matrice renforcée par des renforts dans le but de conférer audit élément des rigidités appropriées). Lorsque l'élément unique remplace un anneau additionnel et un profilé de mélange caoutchouteux, sa section transversale est appropriée pour obtenir la rigidité voulue et par là l'effet mécanique recherché dans le pneumatique. Bien entendu, pour obtenir une bonne liaison entre l'élément unique et les mélanges de caoutchouc du pneumatique, on peut prévoir un traitement de la surface dudit élément qui améliore l'adhésion ; des orifices peuvent en outre être réalisés au travers dudit élément pour laisser le passage aux mélanges de caoutchouc du pneumatique en cours de moulage et vulcanisation.

Un facteur essentiel dans le fonctionnement de chacun des flancs du pneumatique selon l'invention réside dans le couplage mécanique réalisé entre l'anneau additionnel de flanc et le bourrelet par l'intermédiaire du profilé de couplage prolongeant radialement vers l'intérieur ledit anneau.

Quant au profilé de couplage axialement à l'intérieur de la nappe de carcasse axialement à l'extérieur, il peut être par exemple en matériau élastomère et avoir la propriété de résister au moins à la température de moulage et de vulcanisation du pneumatique. Préférentiellement, le profilé a dans le pneumatique moulé une dureté Shore A au moins égale à 65, de manière à offrir une bonne résistance aux efforts de compression de manière à réaliser au mieux l'effet de couplage mécanique précédemment décrit.

On a constaté que lorsqu'on sollicitait transversalement le sommet d'un pneumatique selon l'invention, les variations d'inclinaison des segments de droite passant par les barycentres des sections transversales des anneaux additionnels de flanc et des éléments d'ancrage de bourrelet étaient sensiblement différentes selon le flanc considéré. La variation observée du côté du premier flanc (angle initial β₁ inférieur à 70°) est très inférieure à la variation observée du côté du premier flanc (angle initial β₂ supérieur à 70°).

Ainsi lorsque le premier flanc est placé côté extérieur d'un véhicule et que ce dernier est en virage, la variation angulaire est sensiblement plus importante du côté intérieur au virage, c'est-à-dire du côté du second flanc pneumatique initialement incliné d'un angle β₂. Cette différence d'inclinaison a pour conséquence que la distance axiale D entre les barycentres (ou centres de gravité) des sections transversales des anneaux de flanc reste sensiblement constante voire augmente en virage et cela dès le début de la prise de virage.

Ainsi, il est possible, en virage, d'éviter une trop grande diminution de la largeur d'empreinte de contact par rapport à l'empreinte en roulage en ligne droite et de réduire les reports de pressions de contact de l'intérieur de l'empreinte (correspondant à la partie de l'empreinte de contact située à l'intérieur du virage) vers l'extérieur de l'empreinte des pneumatiques situés à l'extérieur du virage pour améliorer le comportement du véhicule équipé avec des pneumatiques selon l'invention comparativement à l'état de la technique connu. Selon le niveau de dissymétrie d'inclinaison des segments de droite passant par les anneaux additionnels de flanc et les éléments d'ancrage de bourrelet, il est possible d'ajuster au mieux la modification de forme de l'empreinte et de répartition des pressions de contact.

L'anneau additionnel de chaque flanc est préférentiellement situé radialement à une distance, respectivement H₁ et H₂, de la base de chaque bourrelet, inférieure aux deux tiers de la hauteur H du pneumatique sur jante (mesurée entre la base bourrelet de plus petit diamètre et le point de la bande de roulement sur le plan équatorial du pneumatique gonflé), afin de permettre la modification et l'adaptation du profil méridien de l'armature de carcasse en particulier dans la zone épaule du pneumatique. Les hauteurs H₁ et H₂ sont mesurées entre la base de chaque bourrelet et les centres de gravité des anneaux additionnels.

Préférentiellement, la hauteur H₁ du premier flanc à l'extérieur du véhicule est supérieure à la hauteur H₂ du second. De plus et afin de modifier sensiblement la rigidité du premier flanc, il est judicieux que la hauteur H₁ du premier flanc soit supérieure au tiers de la hauteur H.

Afin d'accroître l'efficacité de la transmission des efforts et des couples moteur ou freineur, l'armature de carcasse comprend préférentiellement au moins deux nappes d'éléments de renforcement parallèles entre eux dans chaque nappe et faisant avec la direction circonférentielle un angle compris entre 60° et 90°, au moins une des nappes étant ancrée dans chaque bourrelet par enroulement autour de l'élément d'ancrage et la deuxième nappe dite axialement intérieure étant située axialement à l'intérieur de l'anneau additionnel de flanc et du profilé de caoutchouc entre anneau additionnel et élément d'ancrage de bourrelet.

Ladite armature de carcasse a avantageusement trois nappes de carcasse :
- la nappe axialement extérieure, qui est préférentiellement discontinue et composée de
- deux demi-nappes d'éléments de renforcement textiles radiaux parallèles entre eux dans chaque demi-nappe en faisant avec la direction circonférentielle un angle pouvant être compris entre 60° et 90°, chaque demi-nappe ayant d'une part une extrémité radialement supérieure sous le bord de l'armature de sommet et d'autre part un bord radialement inférieur avec une extrémité au niveau de l'élément d'ancrage de bourrelet, et étant disposée axialement à l'extérieur du profilé entre élément d'ancrage et anneau de flanc, à l'extérieur de l'anneau de flanc et à l'extérieur, dans la zone haute de flanc,
- de deux nappes principales de carcasse, axialement à l'intérieur, formées d'éléments de renforcement textiles croisés d'une nappe à la suivante en faisant avec la direction circonférentielle des angles compris entre 60° et 90°, et enroulées dans chaque bourrelet autour de l'élément d'ancrage pour former des retournements axialement à l'extérieur du bord de nappe de carcasse axialement à l'extérieur.

Préférentiellement, les nappes d'armature de carcasse sont formées d'éléments de renforcement textiles, tel que polyamide aliphatique ou aromatique, polyester, rayonne, parallèles entre eux dans chaque nappe.

Au moins une armature de renforcement additionnelle peut compléter la structure de chaque bourrelet et s'étendre plus ou moins dans un flanc. Cette armature additionnelle, composée d'au moins une nappe d'éléments textiles et/ou métalliques faisant avec la direction circonférentielle un angle compris entre 0° et 45°, peut être disposée axialement à l'extérieur ou à l'intérieur des nappes principales d'armature de carcasse, à l'intérieur ou à l'extérieur de la nappe axialement extérieure.

L'épaisseur du profilé en matériau élastomérique placé entre l'armature principale de carcasse et la nappe additionnelle, mesurée dans chaque flanc perpendiculairement à la droite réunissant les centres de gravité de l'élément d'ancrage et de l'anneau additionnel, peut être minimale sensiblement au niveau desdits élément et anneau, et maximale approximativement vers les deux tiers supérieurs de la hauteur du profilé, en conservant une forme quasi-longiligne, ladite épaisseur maximale étant au moins égale à 3% de la hauteur H du pneumatique sur jante.

Tout en conservant les propriétés du pneumatique selon l'invention, il est possible de réaliser une réduction de poids en diminuant l'épaisseur du profilé dans sa partie voisine de l'élément d'ancrage de l'armature de carcasse.

D'autres caractéristiques et avantages de l'invention ressortent de la description faite ci-après en référence aux dessins annexés qui montrent, à titre d'exemple non limitatif, une forme de réalisation de l'objet de l'invention.
La figure 1 montre une coupe transversale d'un pneumatique selon l'invention monté sur sa jante de montage et gonflé à sa pression d'utilisation ;
La figure 2 montre une coupe transversale du pneumatique de la figure 1, dans sa partie en contact avec la chaussée, ledit pneumatique étant soumis à des efforts transversaux appliqués sur la bande de roulement et simulant une configuration de virage.

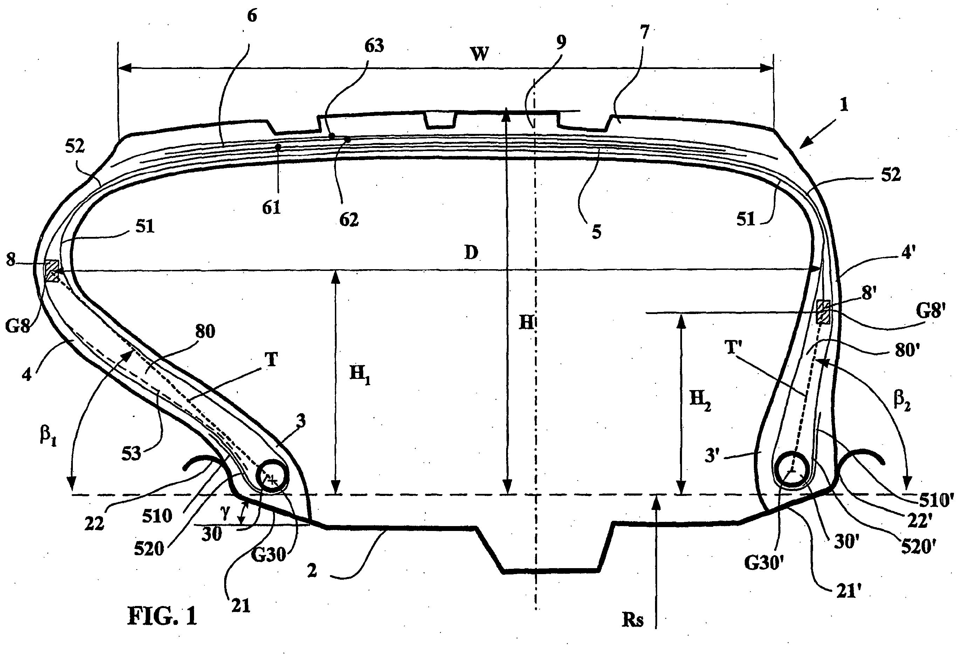

   Sur la figure 1 a été représenté un pneumatique 1 selon l'invention monté et gonflé sur sa jante 2 d'utilisation et destiné à l'équipement d'un véhicule de tourisme. Ce pneumatique comprend, vu en section méridienne, un sommet 9 reliée aux bourrelets 3 et 3' dudit pneumatique 1 par l'intermédiaire de deux flancs 4 et 4', un premier flanc 4 dit extérieur et un second flanc 4' dit l'intérieur des parties inclinées d'un angle ouvert axialement et radialement vers l'extérieur (cet angle ainsi que tous les angles de cette description sont mesurés par rapport à l'axe de rotation) ; ces parties inclinées sont prévues pour être en contact avec des sièges 21, 21' de jante 2 également inclinées d'un même angle γ ouvert axialement et radialement vers l'extérieur. Après montage du pneumatique sur sa jante d'utilisation, un serrage mécanique est obtenu entre les sièges de jante et les bourrelets de pneumatique grâce principalement à la mise en pression dudit pneumatique. En outre et comme connu, les sièges de jante comportent un rebord 22, 22' pour limiter l'écartement axial entre les bourrelets du pneumatique lors du montage et de la mise en pression.

Dans le cas présenté, les sièges de jante ont un même rayon Rs, mais on pourrait bien entendu développer le même type de solution de pneumatique avec une jante ayant des sièges de rayons différents (le pneumatique ayant alors des bourrelets dimensionnés en conséquence).

Ce pneumatique 1 est renforcé par une armature de carcasse 5 composée d'une première nappe 51, axialement à l'intérieur, continue d'un bourrelet à l'autre et ancrée dans chaque bourrelet à une tringle 30, 30' de type tressée pour former des retournements 510 et 510'. Cette première nappe 51 est formée d'une matrice caoutchoutique renforcée par des câbles en polyamide aliphatique, disposés suivant une direction faisant avec la direction circonférentielle un angle voisin de 90°, ledit angle étant mesuré dans le plan équatorial du pneumatique. Une deuxième nappe de carcasse 52 axialement extérieure complète l'armature 5, et est formée des mêmes éléments que ceux constituant la nappe principale 51 ; la nappe 52 a deux extrémités inférieures 520, 520' plaquées contre les retournements 510, 510' de la nappe 51 et située radialement au-dessous d'une droite parallèle à l'axe de rotation et tangente radialement à l'extérieur au contour des tringles 30 et 30'.

Radialement à l'extérieur de l'armature de carcasse 5, est disposée une armature de sommet 6, elle même surmontée d'une bande de roulement 7. Cette armature de sommet 6 comprend deux nappes 61 et 62, dites nappes de travail, chaque nappe de travail comportant une pluralité de câbles métalliques faisant avec la direction circonférentielle un angle compris entre 15° et 25°, les câbles d'une nappe 61 étant croisés avec les câbles de l'autre nappe 62.De largeurs axiales inégales et sensiblement égales à la largeur W de la bande de roulement 7, les nappes de travail 61 et 62 sont surmontées radialement par une nappe 63 de largeur supérieure aux largeurs des nappes 61, 62 et obtenue par enroulement d'un câble de polyamide aromatique, ce qui confère à ce câble une direction approximativement circonférentielle sur le pneumatique.

Le flanc extérieur 4, prévu pour être situé vers l'extérieur du véhicule sur lequel est monté le pneumatique 1, comprend un anneau additionnel de renforcement 8 inextensible positionné dans le flanc de façon que le centre de gravité G8 de sa section méridienne soit radialement situé à une distance H1 de la base du bourrelet égale à 59% de la hauteur H du pneumatique (mesurée sur le pneumatique monté sur jante et gonflé à la pression recommandée par rapport à la base de bourrelet qui est aussi base de jante).

De même, le flanc intérieur 4', prévu pour être situé vers l'intérieur du véhicule, comprend un anneau additionnel de renforcement 8' inextensible positionné dans le flanc de façon que le centre de gravité G8' de sa section méridienne soit radialement situé à une distance H2 de la base du bourrelet égale à 48% de la hauteur H du pneumatique. Ces anneaux 8 et 8' sont placés dans chaque flanc entre les nappes de carcasse 51 et 52.

On entend par anneau inextensible un anneau qui, sous une force de tension circonférentielle égale à 10% de sa force de rupture présente un allongement relatif au plus égal à 1%. Par ailleurs, la base d'un bourrelet est par convention la droite parallèle à l'axe de rotation du pneumatique et passant par le point d'intersection de la trace de la paroi verticale axialement à l'extérieur de chaque bourrelet avec la génératrice du siège de bourrelet.

Chaque anneau additionnel 8, 8' sépare axialement chaque flanc renforcé par l'armature de carcasse 5 en une partie axialement intérieure et une partie axialement extérieure; la partie axialement intérieure est la partie de flanc renforcée par la nappe de carcasse 51, alors que la partie axialement extérieure est renforcée par l'autre nappe de carcasse 52.

De même, chaque anneau additionnel 8, 8' sépare radialement chaque flanc en une partie radialement supérieure et une partie radialement inférieure; la partie radialement supérieure de faible hauteur radiale est la partie radialement à l'extérieur des anneaux additionnels 8, 8' où les nappes de carcasse 51, 52 sont pratiquement superposées, ce qui correspond à ce qu'on appelle usuellement une partie "pneumatique" de flanc. La partie radialement inférieure est la partie radialement à l'intérieur des anneaux additionnels 8, 8' où les nappes de carcasse 51 et 52 sont axialement séparés par un profilé en mélange caoutchouteux, respectivement 80, 80', de forte épaisseur, et de dureté Shore A élevée, puisqu'elle est égale à 80, et qui correspond à ce qu'on appelle usuellement une partie structurelle. La dureté Shore A est mesurée selon la norme ASTM D2240.

Une armature de renforcement additionnelle 53 complète la structure du bourrelet prolongeant . le premier flanc 4. Cette armature additionnelle 53 est composée d'une nappe d'éléments textiles faisant avec la direction circonférentielle un angle compris entre 0° et 45°, ladite nappe étant disposée axialement entre les première et seconde nappes 51, 52 d'armature de carcasse et contre la nappe de carcasse 52 axialement extérieure.

L'épaisseur de chaque profilé 80, 80', maximale sensiblement en son milieu, est égale dans le cas décrit à sensiblement 6% de la hauteur H. Ladite deuxième partie radialement inférieure est fortement inclinée par rapport à la direction axiale.

On admet que l'inclinaison de la deuxième partie radialement inférieure est représentée pour le flanc extérieur 4 par la direction de la droite T qui réunit les centres de gravité des sections méridiennes respectivement G30 de la tringle d'ancrage 30 et G8 de l'anneau additionnel 8. Cette droite T fait avec la direction axiale un angle β₁ ouvert axialement et radialement vers l'extérieur du pneumatique au plus égal à 70°, et dans le cas décrit égal à 56°.

On admet que l'inclinaison de la deuxième partie radialement inférieure est représentée pour le flanc intérieur 4' par la direction de la droite T' qui réunit les centres de gravité des sections méridiennes respectivement G30' de la tringle d'ancrage 30' et G8' de l'anneau additionnel 8'. Cette droite T fait avec la direction axiale un angle β₂ ouvert axialement et radialement vers l'extérieur compris entre 75° et 100°, et dans le cas décrit égal à 85°.

Le profilé de caoutchouc 80 dans le flanc extérieur 4 incliné selon l'angle β₁ axialement entre les deux nappes de carcasse 51 et 52, offre une grande résistance aux efforts de compression et diminue ainsi très fortement l'amplitude de déplacement axial possible de l'anneau de flanc 8, en particulier vers l'intérieur (c'est-à-dire dans la direction de l'anneau 8').

La structure essentiellement pneumatique de la partie supérieure de chaque flanc a la faculté de faciliter la mise à plat de la bande de roulement sur le sol et ainsi d'augmenter la largeur d'aire de contact entre ledit pneumatique et le sol, tout en conservant audit pneumatique des dimensions normalisées. L'augmentation de volume de caoutchouc de bande de roulement qui travaille entraîne de multiples avantages et en particulier une amélioration de toutes les performances liées au contact entre le pneumatique et le sol : adhérence, usure, échauffement, comportement, pour ne citer que les performances les plus fortement influencées.

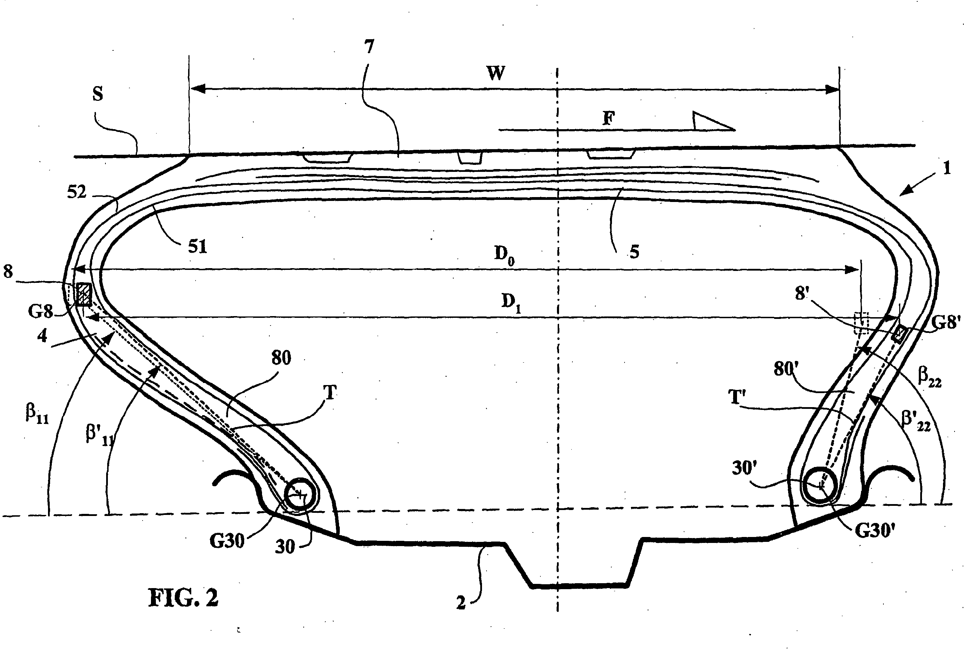

En outre, la dissymétrie des inclinaisons et des positions radiales des profilés de caoutchouc 80 et 80' permet lors d'un virage d'augmenter la distance axiale (mesurée parallèlement à l'axe de rotation) séparant les anneaux additionnels de chaque flanc, comme cela est visible sur la figure 2 qui montre le même pneumatique vu en coupe méridienne, dans sa partie située dans le contact avec la chaussée.

Sur cette figure 2, le pneumatique 1 est représenté gonflé et écrasé en configuration de virage sur un sol S, la flèche repérée F sur le dessin indiquant le sens des forces transversales exercées par le sol sur la surface de contact de la bande de roulement 7. La position représentée correspond au pneumatique à l'avant gauche d'un véhicule tournant à droite.

Sur le premier flanc 4 côté extérieur virage, on voit que la droite T joignant les centres de gravité des sections méridiennes respectivement G30 de la tringle d'ancrage 30 et G8 de l'anneau additionnel 8 est passée d'une inclinaison β₁₁ (mesurée en roulage ligne droite) à une inclinaison β₁₁' (mesurée en virage) légèrement supérieure à β₁₁. Dans le même temps, -la droite T' joignant les centres de gravité des sections méridiennes respectivement G30' de la tringle d'ancrage 30' et G8' de l'anneau additionnel 8' dans le second flanc 4'est passée d'une inclinaison β₂₂ (mesurée en roulage ligne droite) à une inclinaison β₂₂' (mesurée en virage) inférieure à β₂₂. On note, de façon surprenante, que la variation d'inclinaison de la droite T' entre la position écrasée en ligne droite et la position en virage est sensiblement supérieure à la variation d'inclinaison de la droite T dans les mêmes conditions.

Ceci se traduit par une augmentation sensible de la distance séparant les anneaux additionnels 8 et 8' entre la position en roulage ligne droite (repérée par D₀) et la même distance mesurée en virage (et repérée par D₁). Cette augmentation de la distance axiale entre les anneaux permet une conservation voire même une augmentation de la largeur W de l'empreinte de contact en virage et permet principalement d'éviter un déséquilibré dans la répartition des pressions de contact entre le pneumatique et le sol pendant ces phases de virage.

Dans l'exemple décrit avec le support des figures 1 et 2, les diamètres des bourrelets sont sensiblement identiques et permettent le montage du pneumatique sur une jante dont les sièges de bourrelet ont des diamètres identiques; toutefois, il peut être avantageux de combiner les caractéristiques de l'invention avec le fait que le bourrelet du pneumatique prolongeant le premier flanc destiné à être placé côté extérieur véhicule ait un diamètre inférieur au diamètre de l'autre bourrelet. De même, au moins un siège de jante peut avoir une génératrice dont les points axialement les plus à l'intérieur sont sur un cercle de diamètre supérieur au diamètre du cercle sur lequel sont situés les points de la même génératrice axialement les plus à l'extérieur.

On ne sort pas du cadre de l'invention si d'autres armatures additionnelles de renforcement sont ajoutées dans les flancs du pneumatique considéré, par exemple une nappe d'éléments de renforcement enroulée autour d'au moins un anneau additionnel de flanc pour former deux brins radialement au-dessus dudit anneau, brins axialement adjacents qui peuvent avantageusement remplacer l'un au moins des profilés caoutchouteux 80, 80'.

## Revendications

1. Pneumatique (1) comprenant deux bourrelets (3, 3'), un sommet pourvu d'une bande de roulement (7) et des premier et second flancs (4,4') reliant le sommet aux dits bourrelets, lesdits bourrelets comprenant radialement à l'intérieur des parties faisant un angle ouvert axialement et radialement vers l'extérieur et destinées à venir en contact avec une jante comprenant des sièges de jante inclinées d'un angle (γ) également ouvert axialement et radialement vers l'extérieur, ce pneumatique étant renforcé par une armature de carcasse (5) comprenant au moins une nappe de carcasse formée de renforts parallèles entre eux dans la nappe et faisant avec la direction circonférentielle un angle (α) tel que 60° ≤ α ≤ 90°, ladite armature étant ancrée dans chaque bourrelet à au moins un élément annulaire d'ancrage (30, 30'), l'armature de carcasse étant surmontée radialement d'une armature de sommet (6) elle même surmontée de la bande de roulement (7),
les premier et second flancs (4, 4') ayant chacun un anneau inextensible additionnel (8, 8'),
le segment de droite passant par le centre de gravité (G8) de la section de l'anneau (8) du premier flanc (4) et par l'anneau d'ancrage (30) de bourrelet situé dans le prolongement dudit premier flanc faisant avec l'axe de rotation un angle (β₁) ouvert vers l'extérieur,
le segment de droite passant par le centre de gravité (G8') de la section de l'anneau du second flanc (4') et par l'anneau d'ancrage (30') de bourrelet situé dans le prolongement dudit second flanc faisant avec l'axe de rotation un angle (β₂) ouvert vers l'extérieur,
ce pneumatique, monté gonflé à la pression recommandée sur sa jante de service et vu en section méridienne, étant **caractérisé en ce que** :
- l'anneau inextensible additionnel (8, 8') des premier et second flancs (4, 4') est situé axialement à l'intérieur de la nappe de carcasse axialement la plus à l'extérieur
- chaque flanc (4, 4') comprend un profilé de couplage (80, 80') radialement situé entre l'anneau additionnel et l'élément annulaire d'ancrage de bourrelet,
et **en ce que**
l'angle (β₁) est différent de l'angle (β₂).

2. Pneumatique selon la revendication 1 **caractérisé en ce que**, le premier flanc (4) est prévu pour être placé côté extérieur d'un véhicule équipé avec ledit pneumatique.

3. Pneumatique selon la revendication 1 ou la revendication 2 **caractérisé en ce que** l'angle (β₁) mesuré sur le premier flanc (4) est inférieur à l'angle (β₂) mesuré sur le second flanc (4').

4. Pneumatique selon la revendication 3 **caractérisé en ce que** l'angle (β₁) mesuré sur le premier flanc (4) est au plus égal à 70° et l'angle (β₂) mesuré sur le second flanc (4') est supérieur à 70°.

5. Pneumatique selon la revendication 4 **caractérisé en ce que** l'angle (β₂) mesuré sur le second flanc (4') est compris entre 75° et 100°.

6. Pneumatique selon l'une quelconque des revendications 1 à 5 **caractérisé en ce que**, l'anneau additionnel (8) du premier flanc (4) étant situé radialement à une distance (H₁) de la base bourrelet et l'anneau additionnel du second flanc (4') étant situé radialement à une distance (H₂) de la base bourrelet, ces distances (H₁) et (H₂) sont inférieures aux deux tiers de la hauteur (H) du pneumatique sur sa jante de montage, cette hauteur (H) étant mesurée entre la base du bourrelet et le point du sommet sur le plan équatorial du pneumatique.

7. Pneumatique selon la revendication 6 **caractérisé en ce que** la hauteur (H₁) est supérieure à la hauteur (H₂).

8. Pneumatique selon la revendication 7 **caractérisé en ce que** (H₁) est supérieure au tiers de la hauteur (H) du pneumatique sur jante.

9. Pneumatique selon l'une quelconque des revendications 1 à 7 **caractérisé en ce que**, dans chaque flanc, le profilé de couplage axialement (80, 80') à l'intérieur de la nappe de carcasse axialement à l'extérieur est en matériau élastomérique ayant une dureté Shore A au moins égale à 65.

10. Pneumatique selon l'une quelconque des revendications 1 à 8 **caractérisé en ce que** l'armature de carcasse est formée d'au moins deux nappes d'éléments de renforcement parallèles entre eux dans chaque nappe et faisant avec la direction circonférentielle un angle (α) tel que 60° ≤ α ≤ 90°, au moins une des nappes étant ancrée dans chaque bourrelet par enroulement autour de l'élément d'ancrage de bourrelet, la deuxième nappe dite axialement intérieure étant située axialement à l'intérieur de l'anneau additionnel de flanc et du profilé de couplage entre anneau additionnel et élément d'ancrage de bourrelet. intérieure étant située axialement à l'intérieur de l'anneau additionnel de flanc et du profilé de couplage entre anneau additionnel et élément d'ancrage de bourrelet.

## Patentansprüche

1. Luftreifen (1), der zwei Wülste (3, 3'), einen Scheitel, der mit einem Laufstreifen (7) versehen ist, und eine erste und zweite Flanke (4, 4') aufweist, die den Scheitel mit den Wülsten verbinden, wobei die Wülste radial an der Innenseite Bereiche aufweisen, die einen axial und radial nach außen offenen Winkel bilden und mit einer Felge in Kontakt kommen sollen, die Felgensitze aufweist, die in einem ebenfalls axial und radial nach außen offenen Winkel (γ) geneigt sind, wobei der Luftreifen mit einer Karkassenbewehrung (5) verstärkt ist, die mindestens eine Karkassenlage umfasst, die aus Verstärkungen gebildet wird, die in der Lage zueinander parallel verlaufen und mit der Umfangsrichtung einen Winkel (α) von 60 ° ≤ α ≤ 90 ° bilden,
wobei die Bewehrung in jedem Wulst an mindestens einem ringförmigen Verankerungselement (30, 30') verankert ist und sich radial über der Karkassenbewehrung eine Scheitelbewehrung (6) befindet, über der der Laufstreifen (7) angeordnet ist,
wobei die erste und zweite Flanke (4, 4') jeweils einen zusätzlichen nichtdehnbaren Ring (8, 8') aufweist,
wobei die Gerade, die durch den Schwerpunkt (G8) des Querschnitts des Rings (8) der ersten Flanke (4) und durch den Ring zur Verankerung (30) des Wulstes verläuft, der sich in der Verlängerung der ersten Flanke befindet, mit der Drehachse einen nach außen offenen Winkel (β₁) bildet,
wobei die Gerade, die durch den Schwerpunkt (G8') des Querschnitts des Rings der zweiten Flanke (4') und den Ring zur Verankerung (30') des Wulstes verläuft, der sich in der Verlängerung der zweiten Flanke befindet, mit der Drehachse einen nach außen offenen Winkel (β₂) bildet,
wobei der auf der Felge montierte, auf den empfohlenen Druck aufgepumpte Luftreifen im Meridianschnitt **dadurch gekennzeichnet ist, dass**:
- sich der zusätzliche nichtdehnbare Ring (8, 8') der ersten und zweiten Flanke (4, 4') axial an der Innenseite der axial am weitesten außen liegenden Karkassenlage befindet,
- jede Flanke (4, 4') ein Verbindungsprofilteil (80, 80') aufweist, das in radialer Richtung zwischen dem zusätzlichen Ring und dem ringförmigen Verankerungselement des Wulstes liegt,
und dadurch, dass
sich der Winkel (β₁) von dem Winkel (β₂) unterscheidet.

2. Luftreifen nach Anspruch 1, **dadurch gekennzeichnet, dass** die erste Flanke (4) an der Außenseite eines mit dem Luftreifen ausgestatteten Kraftfahrzeugs angebracht werden soll.

3. Luftreifen nach Anspruch 1 oder nach Anspruch 2, **dadurch gekennzeichnet, dass** der an der ersten Flanke (4) gemessene Winkel (β₁) kleiner ist als der an der zweiten Flanke (4') gemessene Winkel (β₂).

4. Luftreifen nach Anspruch 3, **dadurch gekennzeichnet, dass** der an der ersten Flanke (4) gemessene Winkel (β₁) höchstens 70° beträgt und der an der zweiten Flanke (4') gemessene Winkel (β₂) größer 70° ist.

5. Luftreifen nach Anspruch 4, **dadurch gekennzeichnet, dass** der an der zweiten Flanke (4') gemessene Winkel (β₂) im Bereich von 75 bis 100 ° liegt.

6. Luftreifen nach einem der Ansprüche 1 bis 5, **dadurch gekennzeichnet, dass** sich der zusätzliche Ring (8) der ersten Flanke (4) in radialer Richtung in einem Abstand (H₁) von der Wulstbasis befindet und der zusätzliche Ring der zweiten Flanke (4') radial in einem Abstand (H₂) von der Wulstbasis liegt, wobei die Abstände (H₁) und (H₂) kleiner sind als zwei Drittel der Höhe (H) des Luftreifens auf seiner Montagefelge, wobei die Höhe (H) zwischen der Basis des Wulstes und dem Punkt des Scheitels auf der Äquatorialebene des Luftreifens gemessen wird.

7. Luftreifen nach Anspruch 6, **dadurch gekennzeichnet, dass** die Höhe (H₁) größer ist als die Höhe (H₂).

8. Luftreifen nach Anspruch 7, **dadurch gekennzeichnet, dass** (H₁) größer ist als ein Drittel der Höhe (H) des Luftreifens auf der Felge.

9. Luftreifen nach einem der Ansprüche 1 bis 7, **dadurch gekennzeichnet, dass** in jeder Flanke das axial an der Innenseite der axial äußeren Karkassenlage liegende Verbindungsprofilteil (80, 80') aus einem Elastomermaterial mit einer Shore A-Härte von mindestens 65 besteht.

10. Luftreifen nach einem der Ansprüche 1 bis 8, **dadurch gekennzeichnet, dass** die Karkassenbewehrung aus mindestens zwei Lagen von zueinander in jeder Lage parallelen Verstärkungselementen gebildet wird, die mit der Umfangsrichtung einen Winkel (α) von 60 ° ≤ α ≤ 90 ° bilden,
wobei mindestens eine Lage in jedem Wulst durch Hochschlag um das Verankerungselement des Wulstes verankert ist, die zweite axial innere Lage axial an der Innenseite des zusätzlichen Rings der Flanke und des Verbindungsprofilteils zwischen dem zusätzlichen Ring und dem Verankerungselement des Rings liegt.

## Claims

1. Tyre (1) comprising two beads (3, 3'), a crown provided with a tread (7) and first and second sidewalls (4, 4') connecting the said crown to the said beads, the said beads comprising radially on the inside portions which make an angle open axially and radially outwards and intended to be in contact with a rim comprising rim seats inclined at an angle γ which is also open axially and radially outwards, the said tyre being reinforced by a carcass reinforcement (5) comprising at least one carcass ply formed of reinforcements parallel to one another in the ply and making an angle α relative to the circumferential direction such that 60° ≤ α ≤ 90°, the said reinforcement being anchored in each bead to at least one annular anchoring element (30, 30'), and the carcass reinforcement being surmounted radially by a crown reinforcement (6) itself surmounted by the tread (7),
the first and second sidewalls (4, 4') each having an additional, inextensible ring (8, 8'),
the line segment passing through the centre of gravity (G8) of the section of the ring (8) in the first sidewall (4) and through the anchoring ring (30) in the bead located in the extension of the said first sidewall making an angle (β₁) with the rotation axis which is open towards the outside,
the line segment passing through the centre of gravity (G8') of the section of the ring (8') in the second sidewall (4') and through the anchoring ring (30') in the bead located in the extension of the said second sidewall making an angle (β₂) with the rotation axis which is open towards the outside,
the said tyre, as viewed in meridian section when mounted on its service rim and inflated to the recommended pressure, being **characterised in that**:
- the additional inextensible ring (8, 8') of the first and second sidewalls (4, 4') is located axially inside the annular anchoring element in the bead,
- each sidewall (4, 4') comprising a coupling profiled element (80, 80') located radially between the additional ring and the annular anchoring element in the bead,
and **in that**
the angle (β₁) is different from the angle (β₂).

2. Tyre according to Claim 1, **characterised in that** the first sidewall (4) is intended to be positioned on the outside of a vehicle to which the said tyre is fitted.

3. Tyre according to Claims 1 or 2, **characterised in that** the angle (β₁) measured in the first sidewall (4) is smaller than the angle (β₂) measured in the second sidewall (4').

4. Tyre according to Claim 3, **characterised in that** the angle (β₁) measured in the first sidewall (4) is equal to at most 70° and the angle (β₂) measured in the second sidewall (4') is larger than 70°.

5. Tyre according to Claim 4, **characterised in that** the angle (β₂) measured in the second sidewall (4') is between 75° and 100°.

6. Tyre according to any of Claims 1 to 5, **characterised in that** the additional ring (8) of the first sidewall (4) is located radially a distance (H₁) from the bottom of the bead and the additional ring of the second sidewall (4') is located radially a distance (H₂) from the bottom of the bead, these distances (H₁) and (H₂) being smaller than two-thirds of the height (H) of the tyre on its service rim, the said height (H) being measured between the bottom of the bead and the point on the crown in the equatorial plane of the tyre.

7. Tyre according to Claim 6, **characterised in that** the height (H₁) is larger than the height (H₂).

8. Tyre according to Claim 7, **characterised in that** (H₁) is larger than one-third of the height (H) of the tyre on its rim.

9. Tyre according to any of Claims 1 to 7, **characterised in that** in each sidewall, the coupling profiled element (80, 80') axially inside the axially outermost carcass ply is made of an elastomeric material having Shore A hardness equal to at least 65.

10. Tyre according to any of Claims 1 to 8, **characterised in that** the carcass reinforcement is formed of at least two plies of reinforcement elements parallel to one another in each ply and making an angle (α) with the circumferential direction such that 60° ≤ α ≤ 90°, at least one of the plies being anchored in each bead by wrapping around the anchoring element in the bead, and the second ply, called the axially inner ply, being located axially inside the additional sidewall ring and the coupling profiled element between the additional ring and the anchoring element in the bead.
